# EUROPEAN PATENT APPLICATION

(11) **EP 4 660 745 A1**
(43) Date of publication of application: **10.12.2025**
(21) Application number: 24180122.4
(22) Date of filing: 05.06.2024
(51) Int. Cl.: G06F 1/16, H05K 5/02, H05K 5/06, A61B 5/00, H04N 5/64

(54) **HOUSING FACE PANEL ARRANGEMENT AND MEDICAL DEVICE**

(71) Applicant: Koninklijke Philips N.V., 5656 AG Eindhoven (NL)
(72) Inventor: SCHIEBOL, Anna-Christina, Eindhoven (NL); MESZAROS, Julia, Eindhoven (NL)
(74) Representative: Philips Intellectual Property & Standards

(57) **Abstract**

The present disclosure relates to a housing face panel arrangement (16, 36) for covering a housing opening (48) of a medical device (10, 30) and to a medical device (10, 30) that is equipped with such a housing face panel arrangement (16, 36). The housing face panel arrangement (16, 36) comprises a frame portion (20, 40) having an outer side (60) and an inner side (62), and a sealing part (52) that is arranged to be disposed between the frame portion (20, 40) and a housing wall (54) to seal a gap (98) therebetween. An insertion section (66) is formed at the inner side (62), wherein the insertion section (66) protrudes into the housing opening (48) in the mounted state of the housing face panel arrangement (16, 36). The sealing part (52) has a deformable seal (78) that is laterally preloaded when the frame portion (20, 40) is mounted to the housing opening (48).

## Description

### FIELD OF THE INVENTION

The present disclosure relates to a housing face panel arrangement and to a medical device that is equipped with such a housing face panel arrangement. More generally, the present disclosure relates to medical devices, in particular to patient monitoring devices, at least in certain embodiments.

### BACKGROUND OF THE INVENTION

WO 2014/053926 A1 discloses a housing for a patient monitor, the housing comprising at least one first housing part, at least one second housing part, and at least one locking element, wherein the at least one locking element is arranged movably on the first housing part along at least one path and comprises a plurality of first engaging portions. The second housing part comprises a plurality of second engaging portions on the second inner wall. Each one of the first engaging portions forms a releasable fit connection with one corresponding second engaging portion that can be changed between an engaged and a disengaged state. The change between these two states is realized for all the first engaging portions on a locking element and the corresponding second engaging portions simultaneously by moving the respective locking element along the path. WO 2016/188741 A1 generally relates to patient monitors.

US 5,923,319 A discloses a front cover assembly for a touch sensitive device, comprising a top cover, a piece of glass, a bezel for securing said glass to said top cover, and a plurality of spaced tab members. The bezel is formed by injection molding polyurethane between said glass and said top cover while said glass and said top cover are held in a fixed relationship to each other. The bezel forms a mechanical lock between the top cover and the glass, providing a liquid-tight seal. The plurality of spaced tab members are formed in and spaced about the periphery of the bezel providing a small gap between the touch sensitive device and the glass for diffusing a touch force.

Patient monitors are widely used in medical environments, such as ICUs (intensive care units) or hospitals, to monitor and visualize patient-related data, particularly clinical data such as vital signs, scores, and other information related to the patient's health condition. There are different types of patient monitors available including portable devices, accessory devices, stationary stand-alone devices (such as bedside monitors), and other implementations that are operable on conventional computers (including server-client environments).

Patient monitors and other medical devices will typically include user interfaces, connectors, displays, and other control elements. By way of example, user interfaces (including displays, touch-sensitive displays, touchpads, in the caterers, control buttons etc.) will typically be arranged on a front side (operator-facing side) of the devices housing. To this end, openings, apertures and the like may be formed in the housing, to provide seats/receptacles/installation space for the user interfaces. To maintain the overall integrity, tightness, and cleanability/disinfectability of the housing, it is essential to ensure a tight seal and properly integrate and mount additional components in the housing openings of the devices. Patient monitors are typically used in clinical settings where cleanliness and sterilization are important for preventing contamination. In such environments, patient monitors should have design features that reduce the accumulation of contaminants. These features may include minimal gaps, smooth surfaces, and durable sealing that withstands regular cleaning with chemically aggressive agents, which are typically employed in medical settings to maintain high levels of hygiene. Such requirements also exist with front panels, displays and their bezel, and operating panels in general that are attached to and/or integrated in a housing of the device.

It has been observed that patient monitors often rely on a foam seal that is dispensed within the housing of the monitor to create a barrier against contaminants, dust, and moisture. However, the assembly process typically compresses this foam using a rib formed on the bezel/panel, which may degrade the foam's effectiveness over time. This approach may be referred to as axial sealing. Furthermore, the use of pins and other features for securing the bezel/front panel to the housing often introduces additional challenges to the sealing. Accurate tolerances are necessary to ensure proper sealing.

Further, it has been observed that relatively aggressive cleaning agents/ disinfection agents are used in clinical settings. There is frequent cleaning (e.g., by caregivers and/or cleaning staff), which may bring patient monitors and other medical devices into contact with aggressive media.

Therefore, the medical devices should have minimal gaps, have a smooth surface, and should have adequate sealing that does not degrade over time. In the medical domain, aggressive cleaning agents/methods can be used that will put additional strains/wear on the devices.

Generally, there is a need for improved designs in patient monitors and similar medical devices that address these specific environments and requirements, aiming for better cleanability/disinfectability and longer-lasting contamination protection. Another design goal in the field of medical devices and patient monitors is sustainability. Sustainability may involve an easy-to-repair and service-friendly design.

### SUMMARY OF THE INVENTION

In view of the above, it is an object of the present disclosure to provide a housing face panel arrangement for covering a housing opening of a medical device that ensures a tight seal of the face panel to the device's housing. Preferably, the tight sealing is also maintained after disassembling and reassembling of the medical device, e.g., during maintenance and repair. Preferably, the housing face panel arrangement is capable of withstanding strains in a clinical environment. Furthermore, the housing face panel arrangement is preferably designed to endure frequent cleaning with relatively aggressive cleaning agents/disinfection agents. Furthermore, the design of the housing face panel arrangement preferably enables a failure proof or low-error assembly, particularly in regard of the sealing feature. The design should preferably facilitate service and maintenance. Further, the sealing function of the housing face panel arrangement is preferably largely independent of an axial mounting force that urges the face panel against the housing. Likewise, it is further desirable to present a medical device, in particular a patient monitor, that is equipped with such a face panel arrangement.

In a first aspect of the present disclosure, there is presented a housing face panel arrangement for covering a housing opening of a medical device, the housing face panel arrangement comprising:
- a frame portion having an outer side and an inner side,
   wherein an insertion section is formed at the inner side, and
   wherein the insertion section protrudes into the housing opening in the mounted state of the housing face panel arrangement, and
- a sealing part that is arranged to be disposed between the frame portion and a housing wall to seal a gap therebetween,
   wherein the sealing part has a deformable seal that is laterally preloaded when the frame portion is mounted to the housing opening.

This aspect is based on the insight that a reliable and durable sealing feature can be achieved when the sealing part is laterally preloaded, i.e., preloaded at a considerable angle (e.g., by 90°) with respect to the insertion direction. As used herein, the frame portion is axially abutted against the device's housing.

With conventional devices, such axial abutment causes a preloading to generate an axial sealing, e.g., by axially deforming a respective (e.g., foam) seal directly between corresponding sealing faces of the housing and the frame part. However, with such an approach, the sealing force and sealing function is directly dependent on the axial preloading. With the sealing concept according to the present disclosure, the sealing force is substantially defined by the (preferably circumferential) gap between the frame portion and the housing wall into which the deformable seal is pushed as the face panel is mounted. That is, the axial preloading does not have a considerable effect on the lateral preloading. Hence, the sealing concept is also less prone to a degradation of the sealing part that is induced by mechanical stresses.

In certain embodiments, the gap that accommodates at least a portion of the sealing part is defined between the insertion section of the frame portion and the housing wall of the device's housing.

Accordingly, with the housing face panel arrangement according to the present disclosure, a durable and tight sealing can be provided that is relatively insensitive to deformation and mechanical stress. Further, with the lateral (e.g., radial) sealing instead of the axial sealing, the face panel arrangement can be installed and removed relatively easily, which also facilitates maintenance and replacement.

By way of example, the sealing part may be configured as a molded seal, so the sealing part can be assembled to the frame portion and mounted to the device together with the frame portion, which dispenses with the need of applying a foam seal. Consequently, assembly of the medical device is facilitated and is less error-prone.

In addition, as the sealing part can be disposed to some extent within the housing in the gap between the insertion section of the frame portion and the housing wall, the sealing part is difficult to reach for cleaning/disinfection agents, moisture, and the like. This also improves the mechanical sealing effect by hiding the considerably sensitive sealing part.

At least in certain embodiments, cleanability, serviceability, and overall reliability of the medical device can be enhanced with the geometrically optimized design of the sealing concept. As used herein, cleanability also encompasses disinfectability. As used herein, cleaning agents also encompass disinfection agents.

The housing face panel arrangement may be referred to as face panel assembly or face panel unit that encompasses mounting features for mounting a face panel, such as a bezel for a display and/or an operator panel to a housing of a device. In other words, the face panel arrangement's function includes ensuring a sealed cover of the housing opening.

As used herein, the term lateral preloading relates to an outwardly (or inwardly) directed preloading in a direction that is basically parallel (e.g., 0° +/- 30°) to a main plane of the main extension of the panel or display that forms part of the face panel arrangement. In other words, the direction of the lateral preloading is basically orthogonal (e.g., 90° +/- 30°) to the mounting direction for the mounting of the face panel at the device. It is to be noted in this context that the mounting may also involve a swivel movement, but at least at a final stage of the mounting procedure, the direction of the lateral preloading is basically orthogonal (e.g., 90° +/- 30°) to the mounting direction.

The sealing part and the gap between the frame portion and the housing wall together define the sealing effect due to their geometry. The sealing is not significantly defined by the axial mounting force. The deformable seal has a sealing portion (e.g., sealing lip) that is laterally urged against the housing wall in a lateral direction. The deformable seal is deformed to create a preload when the frame portion is inserted into the opening of the housing.

In certain embodiments, the frame portion is a circumferential frame portion that is adapted to the opening of the housing of the medical device.

With the face panel arrangement, the likelihood of any leaks between the frame portion and the housing of the device is significantly reduced. When the frame portion is inserted, a sealing lip of the sealing part can be deformed, with the sealing lip fitting tightly against the housing wall. Hence, a high level of hygiene and protection against the ingress of dust or liquids can be achieved.

The sealing part is made of elastic material, such as silicone. The frame part may be a plastic component, in particular an injection molded plastic component. The device's housing may be a plastic component, but also a sheet-metal built can be envisaged.

The face panel arrangement facilitates repair and maintenance by eliminating the need to remove foam seals or the like. As the sealing part can be a molded seal, assembly, and disassembly is possible. If due to regulatory requirements, technical requirements and the like a new sealing part is to be provided for reassembling the medical device, replacing the sealing part merely requires assembling activities and not the removal and application of foam material or the like.

In certain embodiments, the frame portion is a bezel for a display. In such a case, the frame portion forms a frame/seat for the display, and also a mounting part that provides a mechanical connection between the device's housing and the display. The display may be arranged as a touch-sensitive display (touchscreen).

In certain embodiments, the face panel arrangement does not include a display but for instance other controls. In such a case, the frame portion and the front panel may be integrally formed.

The inner side of the frame portion faces the interior of the device's housing when the face panel arrangement is mounted. The outer side of the frame portion faces an operator that controls the medical device (or reads measured values) at the face panel.

The face panel is typically a flat or relatively flat component. That is, as used herein, an axial direction is basically orthogonal to the planar extension of the face panel, whereas a radial/outward direction is basically parallel to the planar extension of the face panel.

In an exemplary embodiment, the gap between the frame portion and the housing wall is a circumferential gap, wherein the deformable seal is a circumferential deformable seal, for example an elastic circumferential deformable seal, extending along the circumferential gap.

In other words, the deformable seal may be arranged as a continuous seal that is present over the entire length of the circumferential gap between the frame portion and the housing wall. In this way, an interior of the device can be sealed off from an exterior/environment. When the gap and the deformable seal are circumferentially extending parts, the likelihood of any leaks between the device's housing and the frame portion can be significantly reduced.

In another exemplary embodiment, the sealing part comprises a sealing base and a deflectable sealing lip that is brought into a deflected orientation upon an insertion movement of the frame portion into a mounted position. In this way, a biasing force that increases the sealing effect can be generated. The sealing lip can be urged against the housing wall or the frame portion. The deflectable sealing lip provides a dynamic adaptability during insertion, but also during use of the medical device. In the event of any relative movement that would have an effect on the width of the gap, the sealing lip may deflect accordingly and maintain the contact that is necessary for an effective seal.

In certain embodiments, the sealing lip is an outwardly extending sealing lip that extends from the sealing base laterally outwards. In certain embodiments, the sealing lip is an inwardly extending sealing lip that extends from the sealing base laterally inwards.

In another exemplary embodiment, the sealing lip is a continuous circumferential sealing lip. In this way, a continuous contact without interruptions may be provided, which may also be maintained during use of the device. By way of example, a tip of the sealing lip fully surrounds the insertion section of the frame portion.

As used herein, continuous means that there is no leap or sharp transition along the circumferential extension of the sealing lip, in particular of the tip of the sealing lip. In this way, the seal is uninterrupted.

In another exemplary embodiment, the sealing lip extends from the sealing base, wherein the sealing lip is inclined with respect to a direction of the insertion movement. in this way, a defined deflection of the sealing lip is ensured upon insertion of the frame portion.

In another exemplary embodiment, the sealing lip is deformable between a relaxed state and a preloaded state, when the frame is mounted to the housing opening, wherein the sealing lip is urged into the preloaded state in the mounted position, thereby generating a radial sealing force.

The radial sealing force may also be referred to as outwardly directed sealing force. In this way, a radial sealing force is present in the mounted/preloaded state, which ensures a strong and consistent, predictable sealing effect.

In another exemplary embodiment, the sealing lip is inclined towards the outer side, wherein an angle of inclination between the sealing lip and the sealing base is reduced as the frame portion is brought into the mounted position.

This applies in particular when viewed in a cross-sectional view, as seen in a circumferential direction. The resulting angle of inclination is dependent on the present width of the gap between the insertion section and the housing wall. In other words, in case of a slight relative shift between the housing wall and the frame portion, the gap may be slightly larger in width on one side of the device and correspondingly smaller in width on an opposite side of the device. In either case, a proper sealing effect can be ensured as the angle of inclination adapts to the present width of the gap.

In another exemplary embodiment, the sealing lip and a rim portion of the sealing base are V-shaped in cross-section. This applies in particular when viewed in a cross-sectional view, as seen in a circumferential direction. In certain embodiments, the V is open towards the outer side (e.g., facing the operator in front of the panel). Similarly, also the rim portion extends towards the outer side (while still arranged at the inner side of the frame portion). When the insertion section is inserted in the housing, the angle of the V-shape is reduced, to adapt to the width of the gap. In certain embodiments, the rim portion is an integral part of the sealing base.

In another exemplary embodiment, a sealing bead is formed on the sealing base, and wherein the sealing bead is facing away from the sealing lip. This applies in particular when viewed in a cross-sectional view of the sealing profile (deformable seal in the gap), as seen in a circumferential direction. In certain embodiments, the sealing bead is formed on the rim portion, in particular at an end thereof that is facing the outer side. The sealing bead provides an additional preloading at the side that is opposite to the side where the tip of the sealing lip is preloaded. This way, sealing efficiency in the gap between the two parts (housing wall and insertion section close) is increased.

In certain embodiments, the sealing bead is an inwardly extending element, whereas the sealing lip is an outwardly extending element. In certain embodiments, the sealing bead is an outwardly extending sealing portion, whereas the sealing lip is an inwardly extending sealing portion. When the deformable seal is laterally preloaded, both the sealing bead and the sealing lip are urged against their respective abutment part (insertion section or housing wall).

In another exemplary embodiment, corresponding positioning elements are formed on the sealing part and the frame portion, wherein the sealing part is attached to the frame portion and kept in place there during insertion of the frame portion. By way of example, the positioning elements may include corresponding retaining recesses and retaining protrusions that can engage one another. The positioning elements ensure and secure a proper assembly position of the sealing part at the (inner side of the) frame portion.

In certain embodiments, the sealing part is a molded deformable component, and the frame portion is an injection molded component, which makes it possible to integrally formed their respective positioning elements during molding. Consequently, the sealing part may be mounted to the frame portion and kept in place there also during the assembly procedure. In this way, misalignment and/or unwanted shifting during the mounting procedure can be avoided. Applying a proper sealing feature can be reduced to relatively easy and repeatable assembly steps (rather than to the application of a sealing foam or the like).

In another exemplary embodiment, the housing opening has a substantially rectangular shape, wherein the frame portion and the housing wall each have four lateral sides, and wherein the frame portion has a circumferential axial contact shoulder that faces and contacts a circumferential axial abutment face of the housing wall.

The sealing part is not disposed between the axial contact shoulder and the axial abutment face. However, the axial contact shoulder and the axial abutment face may mechanically safeguard the sealing part that is in accordance with the novel design shifted inwards and disposed in the gap between the insertion portion and the housing wall. In certain embodiments, the axial contact shoulder and the axial abutment face have a continuous or nearly continuous circumferential extension. In certain embodiments, the axial contact shoulder is formed at an inwardly facing outer edge of the frame portion.

In certain embodiments, in addition to the deformable seal, a labyrinth seal may be formed at the interface between the frame portion and the housing.

In certain embodiments, the four lateral sides of the rectangular shape include a top side, a bottom side, a left side, and a right side. However, this is not to be understood in a limiting sense.

In another exemplary embodiment, the housing wall has a circumferential protruding edge adjacent to the circumferential axial abutment face, wherein the frame portion has a circumferential slot adjacent to the circumferential axial contact shoulder, and wherein in the mounted state the circumferential protruding edge engages the circumferential slot. In another exemplary embodiment, the housing wall has a circumferential slot adjacent to the circumferential axial abutment face, wherein the frame portion has a circumferential protruding edge adjacent to the circumferential axial contact shoulder, and wherein in the mounted state the circumferential protruding edge engages the circumferential slot.

In either way, the additional labyrinth seal may be composed of even further elements. The labyrinth provides an even better mechanical safeguarding of the elastic deformable seal part. As used herein, a labyrinth seal may include a small gap provided by a tortuous path that contributes to leakage prevention. Generally, the labyrinth seal may have a continuous or nearly continuous circumferential extension.

In certain embodiments, the circumferential protruding edge and the corresponding circumferential slot also facilitate the mounting procedure as they may provide a proper positioning of the frame portion at the housing. In certain embodiments, the circumferential protruding edge and the corresponding circumferential slot also ensure an accurate alignment between the housing and the frame portion, which results in a smooth design of the outer shell of the device at the interface between the housing and the frame portion. Also in this way, cleanability and disinfectability is enhanced.

In certain embodiments, the circumferential protruding edge is offset inwards from the axial abutment face. In certain embodiments, the circumferential slot is offset inwards from the circumferential axial contact shoulder.

In another exemplary embodiment, on one of the four lateral sides two or more locking supports and corresponding locking hooks are formed, wherein the locking hooks engage the locking supports upon a swivel movement of the frame portion onto the housing.

By way of example, the two or more locking supports and corresponding locking hooks are provided on the top side so that the frame portion may be brought into a pre-assembly position there that involves an engagement of the locking supports and the locking hooks, wherein the final assembly position is reached upon swiveling the frame portion onto the housing about a (temporary) swivel axis that is defined in the vicinity the locking supports and the locking hooks.

The locking supports and the locking hooks facilitate an accurate and repeatable mounting via a swivel movement. Further, in the mounted state the locking supports and the locking hooks provide a positive locking feature.

In certain embodiments, the locking hooks are formed on the frame portion, and the locking supports are formed on the housing walls. In certain embodiments, the locking supports are formed on the frame portion, and the locking hooks are formed on the housing walls.

In another exemplary embodiment, at least one locking pin is inserted on the side that is opposite to the side on which the locking supports and the locking hooks are formed, wherein the at least one locking pin secures a mounted position of the frame portion. In this way, a form-fit/positive positional locking is enabled. The frame portion and thus the front panel is secured to the housing of the medical device, whereas the tight seal provided by the deformable sealing part is basically independent of the mounting force.

In another exemplary embodiment, the frame portion is a bezel for a display of a medical device, for example a patient monitoring device. In this way, the display can be integrated in the device's housing while maintaining the tightness and cleanability that is necessary for medical applications.

In another aspect of the present disclosure there is presented a medical device, for example a patient monitor, comprising a housing and a face panel arrangement in accordance with at least one aspect or embodiment as disclosed herein that covers a housing opening of the housing, wherein the face panel arrangement comprises a display that is supported by the frame portion. Generally, the face panel arrangement may comprise user interfaces and the like. The display may be of the LCD, LED, OLED type or of a similar type. Also displays of the e-ink type may be envisaged.

There may be embodiments of medical devices that integrate a face panel arrangement that does not include a display but rather other controls and U/I (user interface) elements.

In accordance with the present disclosure, the medical device may be designed with minimal gaps and smooth surfaces to enhance cleanability. The face panel arrangement provides a robust seal around the housing opening. In this way, internal components of the medical device are protected from dust, moisture, and aggressive cleaning/disinfection agents. The face panel arrangement ensures a tight and reliable seal, even when the device is frequently cleaned with aggressive cleaning/disinfection agents.

Maintenance and repairs may be simplified, which increases availability and reduces downtime.

### BRIEF DESCRIPTION OF THE DRAWINGS

These and other aspects of the disclosure will be apparent from and elucidated with reference to the embodiments described hereinafter. In the following drawings
Fig. 1 shows a perspective view of a medical device that is arranged as a patient monitor;
Fig. 2 shows a perspective front view of another embodiment of a medical device that is arranged as a patient monitor;
Fig. 3 shows a partially exploded view of the device of Fig. 1, illustrating components of a face panel arrangement;
Fig. 4 shows a perspective rear view of the arrangement of Fig. 3;
Fig. 5 shows a perspective cut-out rear view of components of a face panel arrangement;
Fig. 6 shows a cross-sectional broken view of a face panel arrangement in a mounted state, with a deformable sealing part in a relaxed state, for illustrative purposes;
Fig. 7 shows another view of the arrangement of Fig. 6, with the deformable sealing part in a preloaded state;
Fig. 8 shows a perspective cut-out front view of a medical device, with a housing face panel arrangement in an inclined engagement position for mounting; and
Fig. 9 shows another view of the arrangement of Fig. 8, with the housing face panel arrangement in the mounted position in alignment with a housing wall of the housing of the medical device.

### DETAILED DESCRIPTION OF THE INVENTION

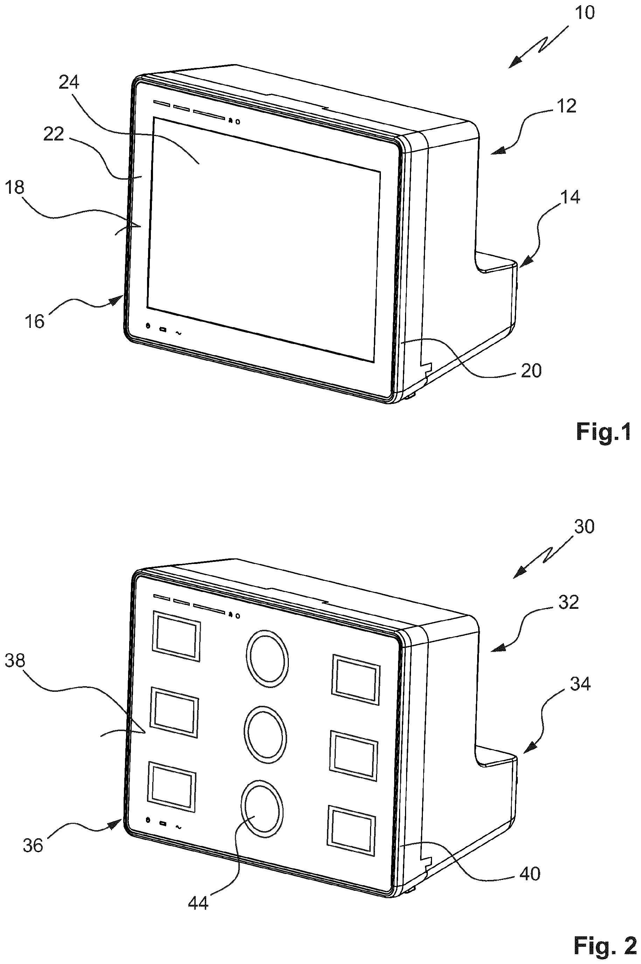

Fig. 1 shows a schematic perspective view of a medical device 10. In the exemplary embodiment, the medical device 10 is arranged as a patient monitor 12. The medical device 10 comprises a housing 14 that accommodates components of the medical device, the housing 14 may also integrate connectors and user interfaces. In the exemplary embodiment, at a front side of the housing 14, a housing face panel arrangement 16 is provided. The face panel arrangement 16 comprises a face panel 18 that is used to close an open side of the housing 14. In the exemplary embodiment, the front side of the housing 14 is the side that is typically facing the user/operator of the medical device 10 when in use. The face panel arrangement 16 comprises a frame portion 20 that is adapted to the housing 14 to be mounted thereto. By way of example, the face panel arrangement 16 comprises a bezel 22 (e.g., formed by the frame portion 20) that surrounds a display 24. In other words, the frame portion 20 and/or the bezel 22 act as a support for the display 24 to mount the display 24 to the housing 14. In certain embodiments, the display 24 is a touch-sensitive display that enables user inputs.

Fig. 2 shows a schematic perspective view of another embodiment of a medical device 30. As with the medical device 10 according to Fig. 1, the medical device 30 according to Fig. 2 is arranged as a patient monitor 32, at least as a component thereof. The medical device 30 comprises a housing 34 at a front side of which a housing face panel arrangement 36 is provided. The face panel arrangement 36 comprises a face panel 38 and a frame portion 40 that is adapted to the housing 34 to be mounted thereto. In the embodiment according to Fig. 2, the face panel arrangement 36 does not necessarily include a display. Rather, the face panel arrangement 36 includes user controls, such as indicators, control knobs, control wheels, switches, dials, and the like. Needless to say, the face panel arrangement 36 may also include visual indicators, which may involve status displays, measurement displays, miniature displays and the like. Similarly, also the face panel arrangement 16 of Fig. 1 may include additional user controls such as push buttons, switches, dials, and the like.

In either case, the medical devices 10, 30 include a housing 14, 34 having a front side (generally facing the user/operator) on which a face panel arrangement 16, 36 is mounted to enclose and seal off the interior of the housing 14, 34 and respective components of the medical devices 10, 30 accommodated therein.

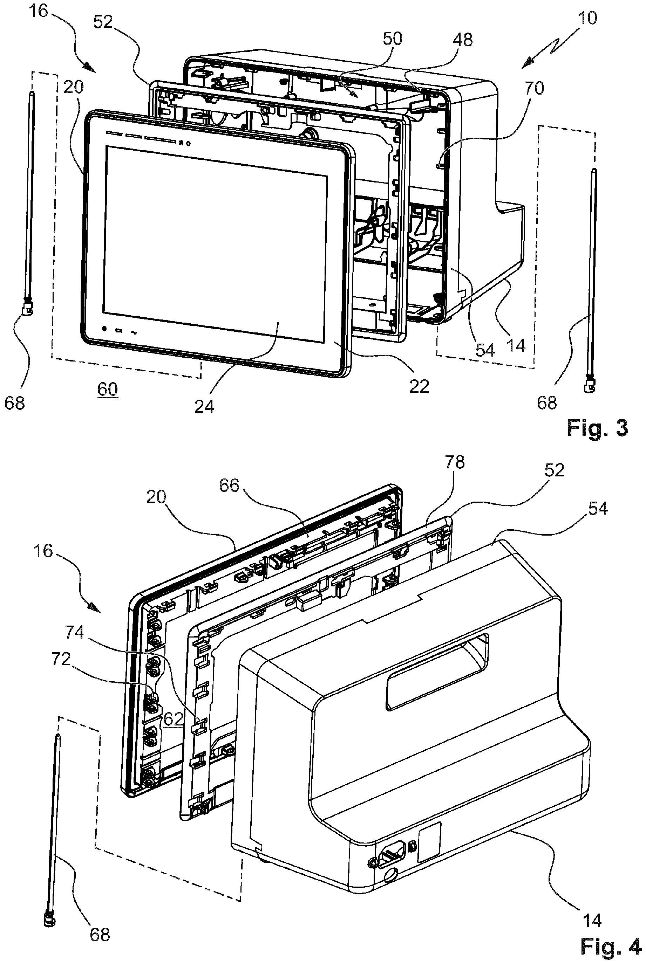

With reference to Figs. 3 and 4, the face panel arrangement 16 is elucidated in more detail. Fig. 3 is an exploded perspective frontal view and Fig. 4 is an exploded rear view of the medical device 10, refer also to Fig. 1.

The housing 14 of the medical device 10 has a housing opening 48 which defines the front side of the housing 14 in the exemplary embodiment. An interior 50 within the housing 14 is closed by the face panel arrangement 16 by mounting the frame portion 22 to a corresponding circumferential housing wall 54 of the housing 14. Between the frame portion 20 and the housing wall 54, a sealing part 52 is provided to seal the interior 50 off from the environment. The housing wall 54 may be regarded as an edge or rim portion of the housing 14 that surrounds the housing opening 48.

As already discussed in more detail hereinbefore, a proper sealing of the housing 14 of the medical device 10 is vital to the intended use of the medical device 10 in medical environments. This necessarily also applies to the mounting of the frame portion 20 of the face panel arrangement 16 to the housing wall 54.

The frame portion 20 has an outer side 16 (refer to Fig. 3) and an inner side 62 (refer to Fig. 4). The outer side 60 is the side of the frame portion 20 and the face panel arrangement 16 that is visible to a user that operates the medical device 10. The inner side 62 faces the interior 50 of the housing 14 of the medical device 10.

In the exploded views of Figs. 3 and 4, the sealing part 52 is detached from the frame portion 20 of the face panel arrangement 16. In certain embodiments, the sealing part 52 is first mounted to the frame portion 20, forming a subassembly. Hence, when the frame portion 20 is mounted to the housing wall 54, also the sealing part 52 is automatically brought into its final assembly position.

As shown in Fig. 4, the frame portion 20 includes an insertion section 66 that is arranged to be inserted in the housing opening 48 of the housing 14. The sealing part 52 rests on the insertion section 66 and may thus extend in the mounted state between the insertion section 66 and the (inner side) of the housing wall 54. Hence, the sealing part 52 may provide a sealing feature between the insertion section 66 and the housing wall 54.

The mounted state of the face panel arrangement is secured by locking pins 68 that are arranged to be inserted in a mounting hole of the housing 14, particularly at a bottom thereof. Such bottom-up mounting of the locking pins 68 enables a relatively closed and easy to clean design of the housing 14 at the opposite top side and also at the right and the left side thereof. Insertion openings for the locking pins 68 are only provided at the bottom side that may be regarded as a less stressed side in terms of contamination and cleaning effort.

At the housing 14, particularly at the housing wall 54, holders 70 that are arranged to be engaged by the locking pin 68 are formed. The holders 70 may be hook-shaped, ring-shaped, and/or shaped as eyelets. The number and position of the holders 70 is adapted to the length of the locking pins 68. In the exemplary embodiments of Figs. 3 and 4, the length of the locking pin is almost the same as the (inner) height of the housing 14 in the area of the housing wall 54.

The locking pins 68 do not only engage the holders 70 of the housing 14, but also corresponding holders 72 that are formed at the frame portion 20 of the face panel arrangement 16, refer also to Fig. 4. As with the holders 70, the holders 72 may also be hook-shaped, ring-shaped, and/or shaped as eyelets. The holders 70 and the holders 72 may be arranged in an alternating fashion so that the locking pins 68 eventually align holders 70 and the holders 72 in the engaged state. In the exemplary embodiments of Figs. 3 and 4 the holders 72 form respective pairs of holders between which a counterpart holder 70 of the housing 14 is arranged in the mounted state. Overall, the locking pins 68 and the holders 70, 72 provide for a positive-fit/form-fit mounting of the frame portion 20 and thus the face panel arrangement 16 at the housing 14.

In certain embodiments, the sealing part 52 is a molded part made from an elastic material, such as silicone. As can be seen in Fig. 4, in the exemplary embodiment, the sealing part 52 includes passages 74 through which the holders 72 of the frame portion 20 extend when the sealing part 52 is mounted to the frame portion. Hence, the form-fit mounting of the frame portion 20 at the housing 14 that is brought about by the locking pins 68 also secures the sealing part 52 between the frame portion 20, particularly the insertion section 66 thereof, and the housing 14, particularly the housing wall 54 thereof.

Further, as the holders 72 of the frame portion 20 engage and extend through the passages 74 of the sealing part 52, the cooperation of the holders 72 and the passages 74 also holds the sealing part 52 in a pre-assembly position at the insertion section 66.

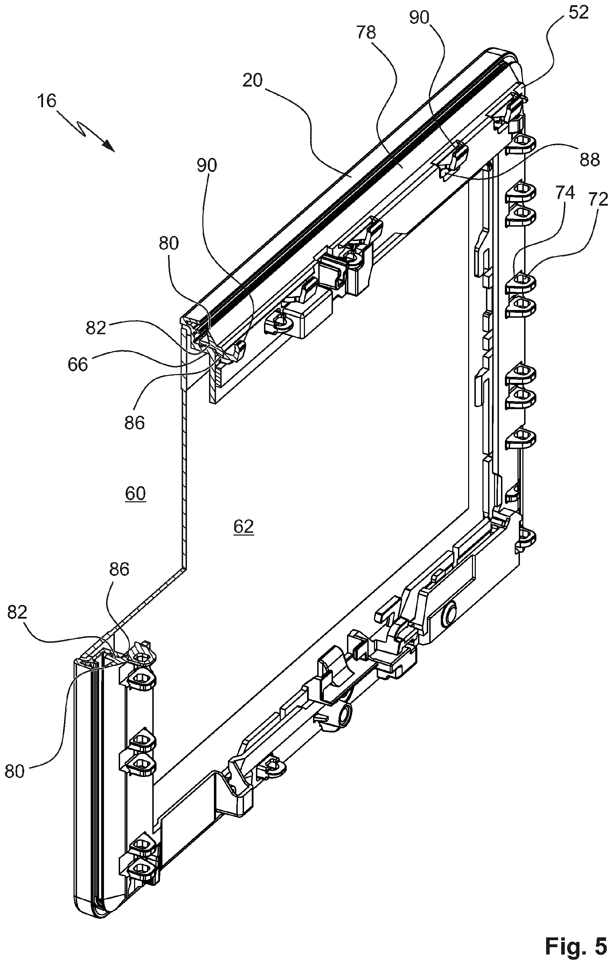

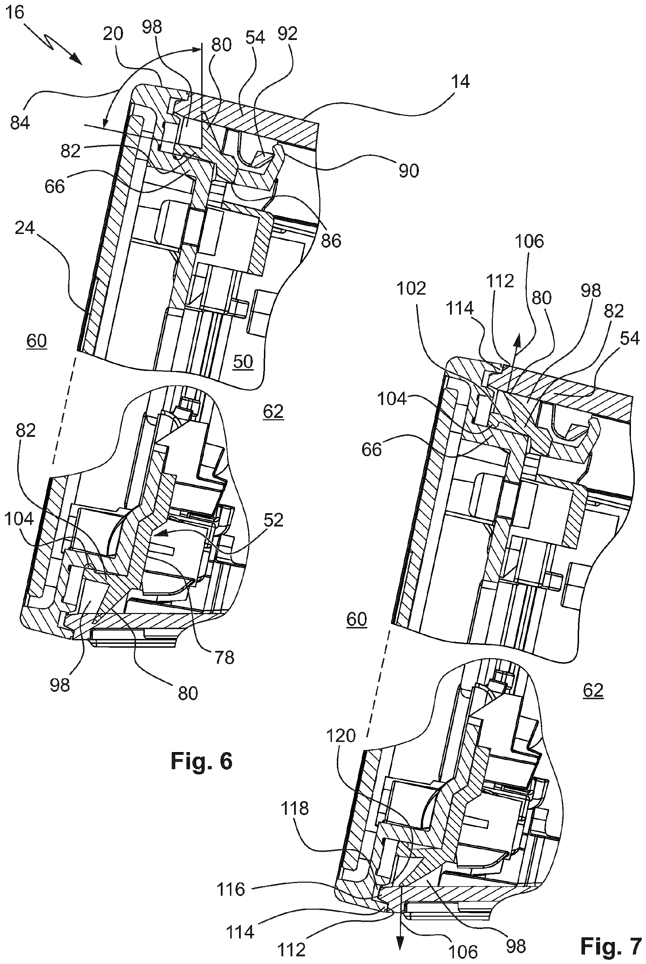

The sealing part 52 includes a deformable seal 78 that is preloaded in the mounted state of the face panel arrangement 16 to ensure a proper sealing between the insertion section 66 and the housing wall 54. With reference to Fig. 5 and with additional reference to Figs. 6 and 7, the design of the sealing part 52 and the deformable seal 78 is illustrated and elucidated in more detail. In the exemplary embodiment, the deformable seal 78 is seated between on outer circumferential surface of the insertion portion 66 and an inner circumferential surface of the housing wall 54.

Fig. 5 is a perspective cut-out rear view of the face panel arrangement 16 with the housing 14 and the housing wall 54 omitted. Figs. 6 and 7 illustrate the mounted state of the face panel arrangement 16, whereas the deformable seal 78 is shown in a relaxed state in Fig. 6 and in a preloaded state in Fig. 7. Fig. 6 deliberately shows interferences between the deformable seal 78 and the insertion section 66 as well as the housing wall 54. Hence, a comparison of Fig. 6 and Fig. 7 explains the preloaded state of the deformable seal 78 in Fig. 7.

In Fig. 5, the sealing part 52 assumes a pre-assembled position at the frame portion 20. In the exemplary embodiment, Fig. 5 illustrates the rectangular shape of the frame portion 20 and thus the face panel arrangement 16. The holders 72 formed on the right side and the left side of the frame portion 20 extend through corresponding passages 74 at the sealing part 52, refer also to Fig. 4.

As shown in the cut-out section of Fig. 5 and in the enlarged cross-sectional views of Figs. 6 and 7, the deformable seal 78 comprises a deflectable sealing lip 80 and a sealing base 82. In the exemplary embodiment, the sealing base 82 adjoins the insertion section 66 of the frame portion 20, whereas the sealing lip 80 extends from the sealing base 82 towards the housing wall 54.

The sealing lip 80 is inclined with respect to the sealing base 82, an angle of inclination is indicated by 84 in Fig. 6. The inclination angle 84 is reduced in the mounted position (refer to Fig. 7) when the state of the deformable seal 78 changes from relaxed to preloaded. In this way, the preloading is generated, which increases sealing efficiency. In the preloaded state, the deformable seal 78 is preloaded in its mounted position between the insertion section 66 and the opposite housing wall 54.

In certain embodiments, the sealing part 52 is a frame-like continuous circumferential part having a top side, a bottom side and a left and a right side. Preferably, also the sealing lip 80 is a continuous circumferential part. Preferably, also the sealing base 82 is a continuous circumferential part.

As can be best seen in Fig. 5, positioning elements 86 are formed at the sealing part 52 and the insertion section 66. The positioning elements 86 may include corresponding male and female elements that serve as positioning aids for mounting the sealing part 52 to the frame portion 20 to assume the pre-assembled state. By way of example, the positioning elements 86 form positive-fit/form-fit mounting features that can engage one another since the sealing part 52 is formed as a deformable seal 78. Due to the elasticity of the sealing part 52, preassembly is possible even with undercut positioning elements 86.

At one side of the frame portion 20, two or more locking hooks 90 are formed. In the exemplary embodiment, the locking hooks 90 are formed at the top side. Generally, the locking hooks 90 are formed at a side of the frame portion 20, where no holders 72 for the locking pins 68 (refer to Figs. 3 and 4) are formed. Both the locking hooks 90 and the holders 72 contribute to the mounting and locking of the face panel arrangement 16 at the housing 14. As with the holders 72, also the locking hooks 90 may extend through corresponding passages 88 in the sealing part 52. In certain embodiments, the positioning elements 86 are formed at or in the vicinity of the coupling between the holders 72 with the passages 74 and the coupling between the locking hooks 90 and the passages 88. In certain embodiments, the positioning elements 86 comprise corresponding protrusions at the sealing part 52 and depressions at or in the vicinity of the holders 72 and/or the locking hooks 90 of the frame portion 20.

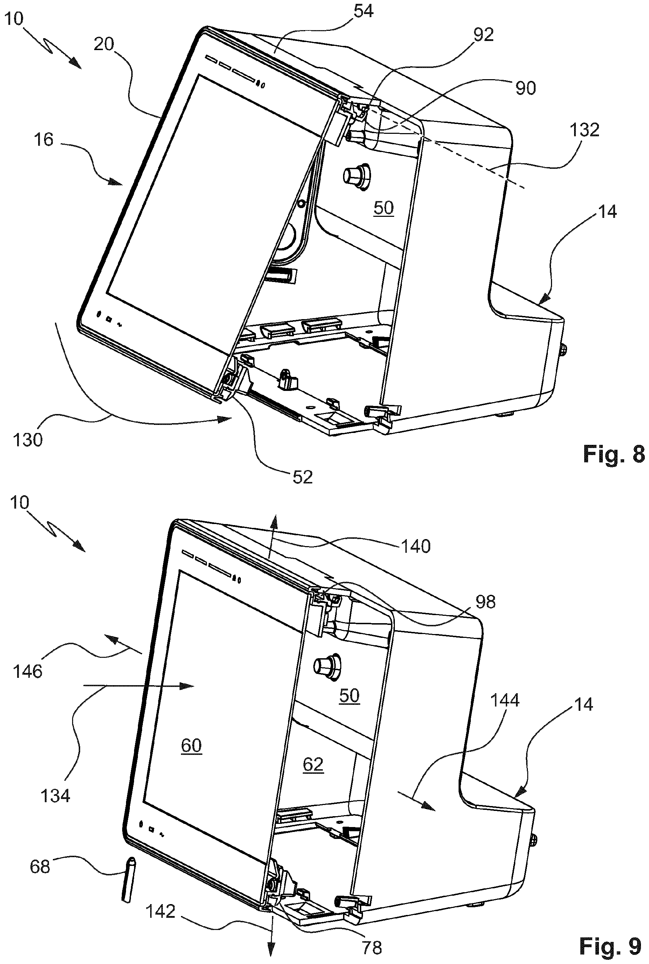

In the mounted state of the face panel arrangement 16, the locking hooks 90 engage locking supports 92 that are formed at the housing wall 54, particularly at a top side thereof, refer to Figs. 6 and 7. The coupling of the locking hooks 90 with the locking supports 92 together with the coupling of the locking pins 68 together with the housing-sided holders 70 and the frame portion-sided holders 72 provide for a proper form-fit mounting of the face panel arrangement 16 at the housing 16 of the medical device 10, refer also to Figs. 8 and 9 in this context.

Reference is made again to Figs. 6 and 7 that illustrate cross-sectional enlarged views of the (circumferential) sealing part 52 and neighboring elements. Between the housing wall 54 and the insertion section 66, a gap 98 is formed. In certain embodiments, the gap 98 is a continuous circumferential gap 98. The deflectable sealing lip 80 and at least a considerable portion of the sealing base 82 are positioned in the gap 98.

As can be best seen in Fig. 7, a sealing bead 104 is formed on a rim portion 102 that is a portion of the sealing base 82 that extends towards the outer side 60. In certain embodiments, the sealing lip 80 sealingly contacts the housing wall 52. In certain embodiments, the sealing bead 104 sealingly contacts the insertion portion 66.

In the cross-sectional views of Figs. 6 and 7, the sealing lip 80 and the rim portion 102 are V-shaped, with the open side of the "V " facing the outer side 60. This ensures that upon the attachment of the face panel arrangement 16 to the housing 14, the deformable seal 78 transitions from the relaxed state (Fig. 6) into the preloaded state (Fig. 7). In this way, the sealing bead 104 is at least slightly urged against the insertion section 66, and the sealing lip 80 is considerably urged against the housing wall 54. A resulting radial sealing force that urges the sealing lip 80 against the housing wall 54 is indicated by reference numeral 106 in Fig. 7. The sealing force 106 is basically orthogonal (e.g., 90° +/- 30°) to an axial direction/insertion direction and thus primarily dependent from the size/width of the gap 98 but not of the precise (axial) mounted position of the face panel arrangement 16 that is defined by the coupling of the locking hooks 90 with the locking supports 92 and the coupling of the locking pin 68 with the holders 70, 72, for instance.

In other words, even in the case of considerable radial and/or axial deviations (geometric deviations and/or positional deviations), the deformability of the deformable seal 78 ensures a proper sealing contact between the sealing bead 104 and the insertion section 66 and between the sealing lip 80 and the housing wall 54.

An axial contact/abutment between the housing wall 54 and the frame portion 20 is brought about by a circumferential axial abutment face 112 of the housing wall 54 that is contacted by a circumferential axial contact shoulder 114 that is formed on the frame portion 20, refer to Fig. 7. The coupling between the axial contact shoulder 114 and the axial abutment face 112 is adjoined by an inwardly displaced coupling/engagement between a circumferential protruding edge 116 formed at an outer face of the housing wall 54 and a corresponding circumferential slot 118 that is formed at the frame portion 20. In this way, overall, a labyrinth seal 120 is formed by the coupling between the abutment face 112 with the contact shoulder 114 and the adjoining coupling between the protruding edge 116 of the slot 118.

In an alternative embodiment, the circumferential protruding edge 116 is formed at the frame portion 20 and a corresponding circumferential slot 118 is formed at an outer face of the housing wall 54. In either case, the labyrinth seal 120 provides additional protection for the deformable seal 78.

With reference to Figs. 8 and 9, an exemplary mounting procedure for the mounting of the face panel arrangement 16 to the housing 14 of the medical device 10 is illustrated. As already explained hereinbefore, in the exemplary embodiment, the housing 14 has four lateral sides at the housing for 54, including a top side, a bottom side, a right side and a left side.

Fig. 8 illustrates an engagement position of the face panel arrangement 16 which may also be referred to as intermediate mounting position. In the exemplary embodiment, the face panel arrangement 16 is moved in an inclined position to the housing 14 to engage the locking supports 92 that are formed at the housing wall 54 (refer also to Figs. 6 and 7) with the locking hooks 90 that are formed at the frame portion 20. In the exemplary embodiment, the locking supports 92 and locking hooks 90 are formed at the top side. In addition to the intended engagement between the locking supports 92 and the locking hooks 90, the engagement position of Fig. 8 may also include a contact between the (top side) abutment face 112 (of the housing wall 54) and the corresponding top side contact shoulder 114 (of the frame portion 20), refer also to Fig. 7 in this context.

With the illustrated initial engagement, a swivel-like insertion movement 130 is possible, whereas the insertion movement 130 is applied with respect to a (temporary) mounting hinge axis 132 that is for instance defined by the preliminary contact between the (top side) abutment face 112 and the corresponding top side contact shoulder 114, and possibly also by the engagement between the locking supports 92 and locking hooks 90.

Fig. 9 illustrates the mounted state, where the face panel arrangement 16 is in full contact with the housing 14 of the medical device 10. In this state, the locking pins 68 may be inserted, refer also to Figs. 3 to 5. When the locking pins 68 are inserted, the face panel arrangement 16 is in a fully mounted, locked and secured state.

An arrow indicated by 134 indicates an axial direction of the mounting movement that is present at least approximately at a final stage of the insertion movement (refer to the curved arrow 130 in Fig. 8). At least at the final stage, the deformable seal 78 is moved into the gap 98 to assume the deformed state there.

As a result, an outwardly directed (radial) sealing force is present that urges the sealing lip 80 (refer to Fig. 7) against the housing wall 54 and consequently also the sealing base 82 with the sealing bead 104 against the insertion section 66. In Fig. 9, arrows indicated by 140 (upwards, top side), 142 (downwards, bottom side), 144 (lateral, right side) and 146 (lateral, left side) illustrate the respective outward preloading direction at the four lateral sides of the housing wall 54. The arrows 140, 142, 144 and 146 indicate the four lateral sides of the housing wall 54 and the frame portion 20.

It is to be noted that the mounting procedure may be different from the embodiment illustrated with reference to Figs. 8 and 9. Also with other assembly procedures (e.g., without an insertion movement in the form of a swivel movement), the beneficial sealing effect may be achieved by separating the mounting direction from the sealing direction, e.g., by applying a design that includes a preloading/sealing direction that is inclined, particularly orthogonal with respect to the insertion/mounting direction.

As already indicated hereinbefore, the terms axial insertion movement and radial preloading do not necessarily relate to a cylindrical design. Further, as shown in connection with Figs. 8 and 9, even though the term axial insertion movement is used to explain the general gist of the sealing concept disclosed herein, the particular insertion movement does not necessarily have to be a strict axial (lineal) movement.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality. A single element or other unit may fulfill the functions of several items recited in the claims. The mere fact that certain measures are recited in mutually different dependent claims does not indicate that a combination of these measures cannot be used as an advantage.

Any reference signs in the claims should not be construed as limiting the scope.

## Claims

1. A housing face panel arrangement (16, 36) for covering a housing opening (48) of a medical device (10, 30), the housing face panel arrangement (16, 36) comprising:
- a frame portion (20, 40) having an outer side (60) and an inner side (62),
wherein an insertion section (66) is formed at the inner side (62), and wherein the insertion section (66) protrudes into the housing opening (48) in the mounted state of the housing face panel arrangement (16, 36), and
- a sealing part (52) that is arranged to be disposed between the frame portion (20, 40) and a housing wall (54) to seal a gap (98) therebetween,
wherein the sealing part (52) has a deformable seal (78) that is laterally preloaded when the frame portion (20, 40) is mounted to the housing opening (48).

2. The arrangement (16, 36) as claimed in claim 1, wherein the gap (98) between the frame portion (20, 40) and the housing wall (54) is a circumferential gap (98), and wherein the deformable seal (78) is a circumferential deformable seal (78), particularly an elastic circumferential deformable seal (78), extending along the circumferential gap (98).

3. The arrangement (16, 36) as claimed in claim 1 or 2, wherein the sealing part (52) comprises a sealing base (82) and a deflectable sealing lip (80) that is brought into a deflected orientation upon an insertion movement of the frame portion (20, 40) into a mounted position, and wherein the sealing lip (80) is preferably a continuous circumferential sealing lip (80).

4. The arrangement (16, 36) as claimed in claim 3, wherein the sealing lip (80) extends from the sealing base (82), wherein the sealing lip (80) is inclined with respect to a direction of the insertion movement.

5. The arrangement (16, 36) as claimed in claim 3 or 4, wherein the sealing lip (80) is deformable between a relaxed state and a preloaded state, when the frame portion (20, 40) is mounted to the housing opening (48), and wherein the sealing lip (80) is urged into the preloaded state in the mounted position, thereby generating a radial sealing force.

6. The arrangement (16, 36) as claimed in any of claims 3-5, wherein the sealing lip (80) is inclined towards the outer side (60), and wherein an angle of inclination (84) between the sealing lip (80) and the sealing base (82) is reduced as the frame portion (20, 40) is brought into the mounted position.

7. The arrangement (16, 36) as claimed in any of claims 3-6, wherein the sealing lip (80) and a rim portion (102) of the sealing base (82) are V-shaped in cross-section.

8. The arrangement (16, 36) as claimed in any of claims 3-7, wherein a sealing bead (104) is formed on the sealing base (82), and wherein the sealing bead (104) is facing away from the sealing lip (80).

9. The arrangement (16, 36) as claimed in any of claims 1-8, wherein corresponding positioning elements (86) are formed on the sealing part (52) and the frame portion (20, 40), and wherein the sealing part (52) is attached to the frame portion (20, 40) and kept in place there during insertion of the frame portion (20, 40).

10. The arrangement (16, 36) as claimed in any of claims 1-9, wherein the housing opening (48) has a substantially rectangular shape, wherein the frame portion (20, 40) and the housing wall (54) each have four lateral sides, and wherein the frame portion (20, 40) has a circumferential axial contact shoulder (114) that faces and contacts a circumferential axial abutment face (112) of the housing wall (54).

11. The arrangement (16, 36) as claimed in claim 10, wherein the housing wall (54) has a circumferential protruding edge (116) adjacent to the circumferential axial abutment face (112), wherein the frame portion (20, 40) has a circumferential slot (118) adjacent to the circumferential axial contact shoulder (114), and wherein in the mounted state the circumferential protruding edge (116) engages the circumferential slot (118).

12. The arrangement (16, 36) as claimed in claim 10 or 11, wherein on one of the four lateral sides two or more locking supports (92) and corresponding locking hooks (90) are formed, and wherein the locking hooks (90) engage the locking supports (92) upon a swivel movement of the frame portion (20, 40) onto the housing (14).

13. The arrangement (16, 36) as claimed in claim 11 or 12, wherein at least one locking pin (68) is inserted on the side that is opposite to the side on which the locking supports (92) and the locking hooks (90) are formed, wherein the at least one locking pin (68) secures a mounted position of the frame portion (20, 40).

14. The arrangement (16, 36) as claimed in any of claims 1-13, wherein the frame portion (20, 40) is a bezel for a display of a medical device (10, 30), in particular a patient monitoring device (12, 32).

15. A medical device (10, 30), in particular a patient monitor (12), comprising a housing (14) and a face panel arrangement (16, 36) as claimed in any of claims 1-14 that covers a housing opening (48) of the housing (14), wherein the face panel arrangement (16, 36) comprises a display (24) that is supported by the frame portion (20, 40).
